# EUROPÄISCHE PATENTANMELDUNG

(11) **EP 2 338 321 A2**
(43) Veröffentlichungstag der Anmeldung: **29.06.2011**
(21) Anmeldenummer: 10401146.5
(22) Anmeldetag: 18.08.2010
(51) Int. Cl.: A01B 29/04

(54) **Bodenwalze**

(30) Priorität: 08.10.2009 DE 102009044202
(71) Anmelder: Amazonen-Werke H. Dreyer GmbH & Co. KG, 49205 Hasbergen (DE)
(72) Erfinder: Pokriefke, Michael, 27798 Hude (DE); Reinke, Wilfried, 26123 Oldenburg (DE)

(57) **Zusammenfassung**

In einem Tragrahmen drehbar gelagerte Bodenwalze mit einer aus beabstandet zueinander angeordneten und die Walzenoberfläche bildenden ringförmig umlaufenden Verdichtungswülsten, wobei die Walzenoberfläche im Längsquerschnitt wellenförmig ausgestaltet ist. Um die bekannte Bodenwalze hinsichtlich ihres Gewichtes wesentlich zu reduzieren und gleichzeitig eine Flexibilität des Mantels der Bodenwalze über ihre Arbeitsbreite zu erhalten, ist vorgesehen, dass der Walzenmantel aus einem wellenförmig verformten Mantel eines Stahlblechrohres gebildet ist.

## Beschreibung

Die Erfindung betrifft eine in einem Tragrahmen drehbar gelagerte Bodenwalze gemäß des Oberbegriffes des Patentanspruches 1.

Eine derartige Bodenwalze ist beispielsweise durch die EP 16 14 334 B1 bekannt. Diese Bodenwalze weist ein zentrales Tragrohr auf, auf dem seitlich im Querschnitt keilförmig ausgestaltete und ringförmig umlaufende Verdichtungswülste aufgeschoben sind, um eine Walzenoberfläche zu erreichen, die im Längsquerschnitt wellenförmig ausgestaltet ist. Das Tragrohr ist mittels Lagerelementen in einem Tragrahmen drehbar gelagert.

Eine derartig ausgestaltete Bodenwalze mit auf einem als Stahlrohr ausgebildeten Tragrohr aufgeschobenen, aus Gummi bestehenden Verdichtungswülsten ergibt eine sehr schwere Bodenwalze. Bodenwalzen mit einem derartig großen Gewicht sind nicht immer gewünscht.

Der Erfindung liegt die Aufgabe zugrunde, die bekannte Bodenwalze hinsichtlich ihres Gewichtes wesentlich zu reduzieren und gleichzeitig eine Flexibilität des Mantels der Bodenwalze über ihre Arbeitsbreite zu erhalten.

Diese Aufgabe wird erfindungsgemäß dadurch gelöst, dass der Walzenmantel aus einem wellenförmig verformten Mantel eines Stahlblechrohres gebildet ist. Infolge dieser Maßnahme wird eine sehr leicht ausgestaltete Bodenwalze geschaffen, welche aus dem Material heraus geformten Verdichtungswülste aufweist. Durch die Lagerung des Walzenmantels jeweils nur auf der Außenseite des Walzenmantels in einem Tragrahmen ergibt sich eine große Elastizität der Bodenwalze bzw. des Walzenmantels über die Länge der Bodenwalze quer zur Fahrtrichtung.

Um sicherzustellen, dass die Bodenwalze sich in elastischer Weise entsprechend durchbiegen kann, ist vorgesehen, dass nur an den beiden Endbereichen des Walzenmantels der Bodenwalze mit der Walzenachse verbundene speichen- und/oder felgenartige Abstützelemente angeordnet sind.

Um in einfacher Weise eine gute Reinigung der Täler zwischen den Wülsten von anhaftendem Erdreich in einfacher Weise erreichen zu können, ist vorgesehen, dass in den umlaufenden Tälern zwischen den Wülsten jeweils ein Arbeitsring mit axialem und radialem Spiel auf dem Walzenmantel angeordnet ist.

Damit die Arbeitsringe in einfacher Weise die anhaftenden Bodenteile von der Walzenoberfläche abschaben können, ist vorgesehen, dass den Arbeitsringen in axialer Richtung über die Arbeitsringe überstehende Vorsprünge zugeordnet sind.

Damit die Vorsprünge die Walzenoberfläche nicht beschädigen oder Beulen oder Dellen in die Walzenoberfläche hineindrücken, ist vorgesehen, dass die Vorsprünge zumindest in dem dem Walzenmantel zugewandten Bereich zumindest in ihrem oberflächennahen Bereich aus einem elastischen und/oder flexiblen Material wie Gummi- oder Kunststoff bestehen.

Eine vorteilhafte Ausgestaltung der Vorsprünge lässt sich dadurch erreichen, dass die Vorsprünge zumindest annähernd eine den sich zwischen den Wülsten befindlichen Tälern entsprechende Außenkontur aufweisen.

Weitere Einzelheiten der Erfindung sind der Beispielsbeschreibung und den Zeichnungen zu entnehmen.

### Hierbei zeigen

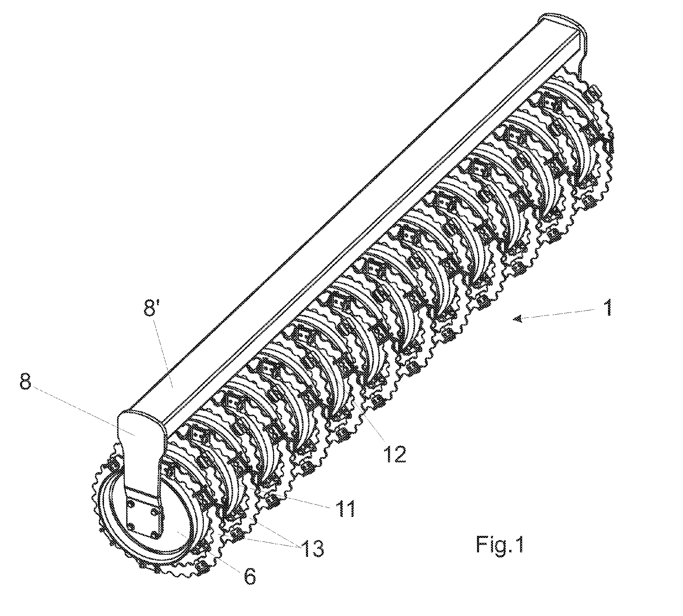

- Fig. 1: eine als Keilringwalze ausgebildete Bodenwalze mit Arbeitsring in perspektivischer Darstellung,
- Fig. 2: die Bodenwalze in Seitenansicht,
- Fig. 3: die Bodenwalze im Schnitt III - III und
- Fig. 4: die Bodenwalze in ausschnittsweiser Darstellung im vergrößertem Maßstab in der Ansicht III - III.

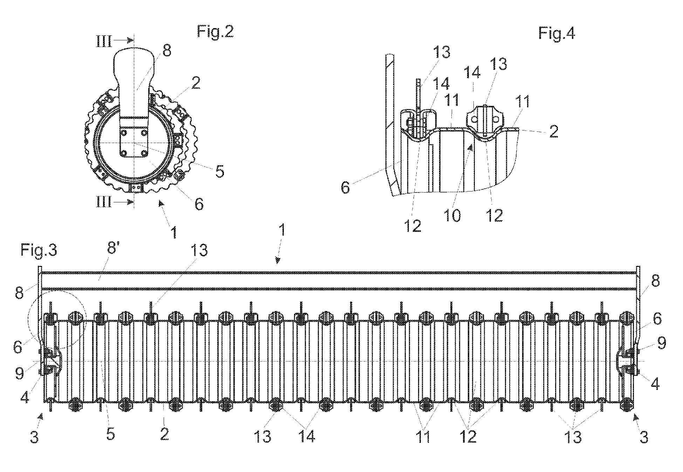

Die Bodenwalze 1 weist den Walzenmantel 2 auf, welcher rohrförmig ausgestaltet ist. Der Walzenmantel 2 ist nur an den beiden Endbereichen 3 des Walzenmantels 2 der Bodenwalze 1 mit der von Wellsenstümpfen 4 gebildeten Walzenachse 5 über speichen- oder felgenartigen Abstützelementen 6 verbunden. Die die Walzenachse 5 bildenden Wellenstümpfe 4 sind mittels Lager 7 an Tragarmen 8 des Tragrahmens 8' frei drehbar gelagert. Der Walzenmantel 2 ist aus einem wellenförmig verformten Mantel eines Stahlblechrohres hergestellt. Durch den wellenförmig verformten Mantel des Stahlblechrohres weist der Walzenmantel 2 auf seiner Walzenoberfläche im Längsquerschnitt wellenförmige Ausgestaltungen 10 auf, wie insbesondere die Fig. 3 und 4 zeigen.

Durch den wellenförmig verformten Mantel eines Stahlblechrohres weist die Walzenoberfläche des Walzenmantels 2 ringförmig umlaufende Verdichtungswülste 11 und zu den Verdichtungswülsten 11 vertieft umlaufende Walzentäler 12 auf. Die Verdichtungswülste 11 und Walzentäler 12 sind, wie die Fig. 3 und 4 zeigen beabstandet zueinander angeordnet.

In den umlaufenden Tälern 12 zwischen den Wülsten 11 ist jeweils ein ovaler Arbeitsring 13 mit axialem und radialem Spiel auf dem Walzenmantel 2 angeordnet, wie die Figuren zeigen. Die Arbeitsringe 13 weisen in axialer Richtung über die Arbeitsringe 13 überstehende Vorsprünge 14 auf. Diese Vorsprünge 14 bestehen zumindest in ihrem oberflächennahen Bereichen aus einem elastischen und/oder flexiblen Material, wie Gummi oder Kunststoff. Hierbei ist dieses flexible Material zumindest in dem dem Walzenmantel zugewandten Bereich angeordnet. Auch die gesamten Vorsprünge 14 können insgesamt aus dem flexiblen Material wie Gummi oder Kunststoff bestehen. Die Vorsprünge 14 weisen zumindest annähernd eine den sich zwischen den Wülsten 11 befindlichen Tälern 12 entsprechende Außenkontur auf.

Durch den Verzicht von auf einem Tragrohr aufgeschobenen und aus Gummi bestehenden ringförmigen Verdichtungswülsten und einer statt dessen Ausformung der Verdichtungswülste 11 durch die wellenförmige Ausformung des Materials eines Stahlblechrohres zu Verdichtungswülsten 11 eines Walzenmantels 2 wird eine sehr leichte Bauweise der Bodenwalze 1 erreicht. Weiterhin ist gewährleistet, dass durch diese Ausgestaltung sich einerseits eine große Stabilität der Bodenwalze 1 ergibt, andererseits die Bodenwalze 1 jedoch über ihre Länge eine gewisse Elastizität aufweist, so dass die Bodenwalze 1 sich über ihre Länge aufgrund ihrer Ausgestaltung und der Abstützung nur in den Endbereichen 3 des Walzenmantels 2 durchbiegen kann.

Mittels der den Arbeitsringen 13 zugeordneten Vorsprüngen 14 lässt sich anhaftende Erde von der Walzenoberfläche zumindest in dem Bereich der Täler 12 zwischen den Verdichtungswülsten 11 in einfacher Weise entfernen. Durch die Ausgestaltung der Vorsprünge 14 zumindest in dem dem Walzenmantel zugewandten Bereich aus einem flexiblen Material wird eine Beschädigung des Walzenmantels 2 durch die Vorsprünge 14 und die Arbeitsringe 13 vermieden.

## Patentansprüche

1. In einem Tragrahmen drehbar gelagerte Bodenwalze mit einer aus beabstandet zueinander angeordneten und die Walzenoberfläche bildenden ringförmig umlaufenden Verdichtungswülsten, wobei die Walzenoberfläche im Längsquerschnitt wellenförmig ausgestaltet ist, **dadurch gekennzeichnet, dass** der Walzenmantel (2) aus einem wellenförmig verformten Mantel eines Stahlblechrohres gebildet ist.

2. Bodenwalze nach Anspruch 1, **dadurch gekennzeichnet, dass** nur an den beiden Endbereichen des Walzenmantels (2) der Bodenwalze (2) mit der Walzenachse (5) verbundene speichenund/oder felgenartige Abstützelemente (6) angeordnet sind.

3. Bodenwalze nach zumindest einem der vorstehenden Ansprüche, **dadurch gekennzeichnet, dass** in den umlaufenden Tälern (12) zwischen den Wülsten (11) jeweils ein Arbeitsring (13) mit axialem und radialem Spiel auf dem Walzenmantel (2) angeordnet ist.

4. Bodenwalze nach zumindest einem der vorstehenden Ansprüche, **dadurch gekennzeichnet, dass** den Arbeitsringen (13) in axialer Richtung über die Arbeitsringe (13) überstehende Vorsprünge (14) zugeordnet sind.

5. Bodenwalze nach Anspruch 4, **dadurch gekennzeichnet, dass** die Vorsprünge (139 zumindest in dem Walzenmantel 8"9 zugewandten Bereich zumindest in ihrem oberflächennahen Bereich aus einem elastischen und/oder flexiblen Material wie Gummi- oder Kunststoff bestehen.

6. Bodenwalze nach Anspruch 4, **dadurch gekennzeichnet, dass** die Vorsprünge (14) zumindest annähernd eine den sich zwischen den Wülsten (11) befindlichen Tälern (12) entsprechende Außenkontur aufweisen.
